Euròpäisches Patentamt

European Patent Office

Office européen des brevets

(19)

(11) Numéro de publication: **0 001 033**
**B1**

(12) ## FASCICULE DE BREVET EUROPEEN

(45) Date de publication du fascicule de brevet: **14.10.81**

(21) Numéro de dépôt: **78870004.5**

(22) Date de dépôt: **17.08.78**

(51) Int. Cl.³: **F 41 H 7/02,** B 60 K 5/00,
B 62 D 11/04

(54) Véhicule blindé à propulsion par chenilles.

(30) Priorité: **18.08.77 BE 1008330**

(43) Date de publication de la demande:
**07.03.79 Bulletin 79/5**

(45) Mention de la délivrance du brevet:
**14.10.81 Bulletin 81/41**

(84) Etats Contractants Désignés:
**BE CH DE FR GB SE**

(73) Titulaire: **ATELIERS DE CONSTRUCTIONS
ELECTRIQUES DE CHARLEROI (ACEC) Société
Anonyme
54, Chaussée de Charleroi
B-1060 Bruxelles (BE)**

(72) Inventeur: **Fagel, Roger
102, Avenue Forestière
Marcinelle (BE)**

(74) Mandataire: **Meunier, Marcel et al,
ACEC - Service des Brevets Boîte Postale 4
B-6000 Charleroi (BE)**

(56) Documents cités:
CH - A - 532 239
DE - B - 1 090 549
FR - A - 918 274
FR - A - 996 923
FR - A - 1 316 704
US - A - 1 863 504

JANES'S WORLD ARMOURED FIGHTING
VEHICLES, Auteur C. F. FOSS; Première Edition en
1976 par MacDonald and Jane's Publishers Ltd.
Paulton House, 8, Shepherdess Walk, London
N17LW.

TASCHENBUCH DER PANZER, 1976; Auteur F.
M. Von Senger und Etterlin; Edité par J. F.
Lehmanns Verlag
München (DE).

JANE'S WORLD ARMOURED FIGHTING
VEHICLES, Auteur C. F. Foss; Première Edition en
1976 par MacDonald and Jane's Publishers Ltd.
Paulton House, 8, Shepherdess Walk, London
N17LW (GB).

SOLDAT UND TECHNIK, 7/1975, YP-408 "Ein
Mehrzweck Achtradpanzer für holländisches
Heer".

SOLDAT UND TECHNIK 3/1971, Lomdepanzen
LVTP-7 (LVTPX-12).

Courier Press, Leamington Spa, England.

## Véhicule blindé à propulsion par chenilles

La présente invention est relative aux véhicules blindés à propulsion par chenilles, autrement désignés sous l'appellation de véhicules chenillés.

Dans une construction connue de tels véhicules chenillés par exemple le brevet CH - A - 532239, l'ensemble de propulsion est disposé à l'avant du véhicule derrière la paroi frontale de celui-ci et comprend un moteur d'entraînement et à côté de ce moteur un espace libre; en espace arrière est aménagé entre et au dessus des chenilles et est accessible au moins par une porte arrière. L'ensemble de propulsion comprend un moteur à combustion interne, une boîte de vitesses, un pont différentiel avec variateurs de vitesse pour l'entraînement des deux chenilles latérales et les barbotins moteurs de ces deux chenilles qui entraînent celles-ci par leur extrémité avant. Vu la puissance à transmettre et les performances à réaliser tout cet ensemble de propulsion est d'une dimension importante et d'un poids conséquent.

Il en résulte que la partie avant du véhicule est occupée par la boîte de vitesses, le pont différentiel avec variateurs de vitesse pour les barbotins, ensemble également appelé en jargon "cross-drive", exigeant un volume important. Une conséquence directe de cette exigence est que l'espace dévolu aux organes de direction du véhicule doit être écarté de la paroi avant et reporté vers la partie centrale du véhicule.

Autrement dit, le véhicule présente une sorte de "nez" ou de "bec" abritant le "cross-drive" qui est en avant des servants chargés de le manoeuvrer et d'utiliser les armes tactiques.

Si en terrain découvert, la présence de ce "nez" ou de ce "bec" ne constitue par un inconvénient grave, il n'en est pas de même lors de la présence d'obstacles qui obligent les servants du véhicule à découvrir l'avant de celui-ci avant qu'ils ne puissent se rendre compte de la situation qui se présente à eux et avant qu'ils n'aient les réactions nécessaires en vue des mesures à prendre.

Dans la publication CH - A - 532239, on a notamment proposé de disposer le moteur thermique de l'ensemble de propulsion sur un côté du véhicule, par exemple sur le côté droit de celui-ci vu dans le sens de marche, afin de prévoir sur le côté gauche du véhicule un espace libre qui peut être utilisé comme poste de direction et comme poste éventuel du tir. Bien que cette disposition présente un avantage, il n'en reste pas moins que devant le conducteur du véhicule reste localisé l'ensemble désigné ci-dessus par "cross-drive"; l'avantage escompté d'une vision plus rapide des servants du véhicule n'est donc que limité.

Il est déjà connu que des véhicules, chenillés ou autres, peuvent être équipés d'une transmission électrique, les moteurs électriques de propulsion étant alimentés à partir d'un groupe électrogène, comme par exemple dans les publications US - A - 1863504 et Jane's World Armoured Fighting Vehicles, de C. F. Foss, de 1976, page 393.

La présente invention concerne une nouvelle disposition constructive d'un véhicule chenillé, à transmission électrique, de conception plus simple, d'un dimensionnement et d'un poids plus réduits, d'une facilité de manoeuvre plus grande et d'une plus grande efficacité opérationnelle, grâce à une redistribution des divers constituants.

Selon la présente invention, le véhicule blindé à propulsion par chenilles au moyen de barbotins moteurs entraînés par un ensemble de propulsion comprenant un moteur d'entraînement disposé à la partie avant du véhicule et à côté de ce moteur un espace libre ainsiqu'à l'arrière un espace aménagé en un compartiment arrière entre et au dessus des chenilles, accessible au moins par une porte arrière, est caractérisé en ce que:

a) l'ensemble de propulsion comprend un groupe électrogène formé du moteur d'entraînement et d'une génératrice de courant électrique disposé longitudinalement à la partie centrale de l'avant du véhicule, directement derrière la paroi frontale blindée,

b) des postes de conduite et de tir sont disposés à l'avant du véhicule de part et d'autre de l'ensemble de propulsion.

c) les barbotins moteurs sont disposés à l'arrière des chenilles et sont équipés de moteurs électriques incorporés, laissant entr'eux l'accès libre au compartiment arrière.

L'invention suivant la présente demande de brevet sera explicitée dans la description qui va suivre d'un exemple de réalisation d'un véhicule chenillé répondant aux caractéristiques de la présente invention.

Les dessins annexés représentent respectivement:

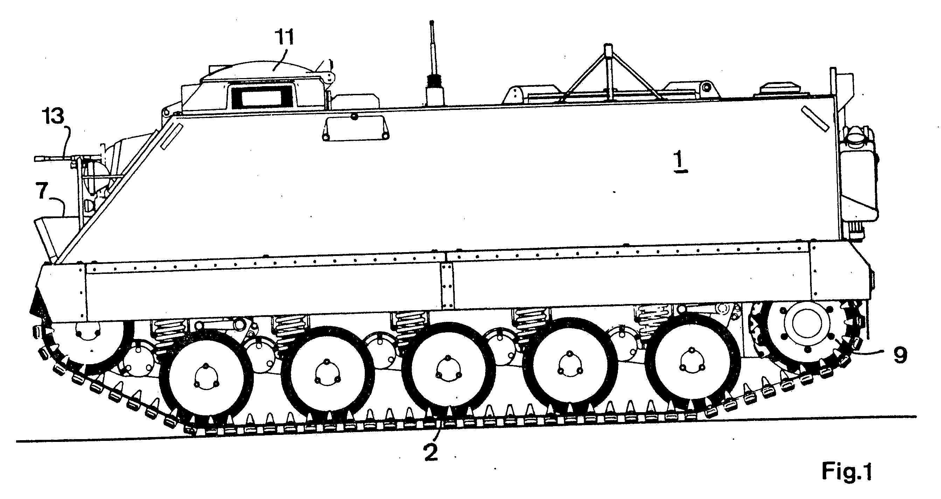

a) en figure 1, une vue en élévation,

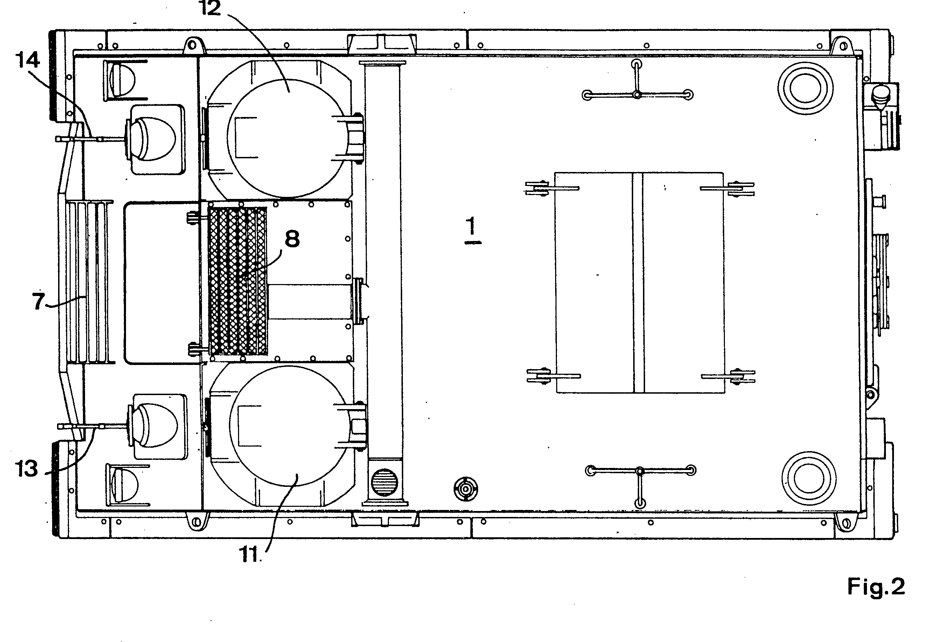

b) en figure 2, un vue en plan,

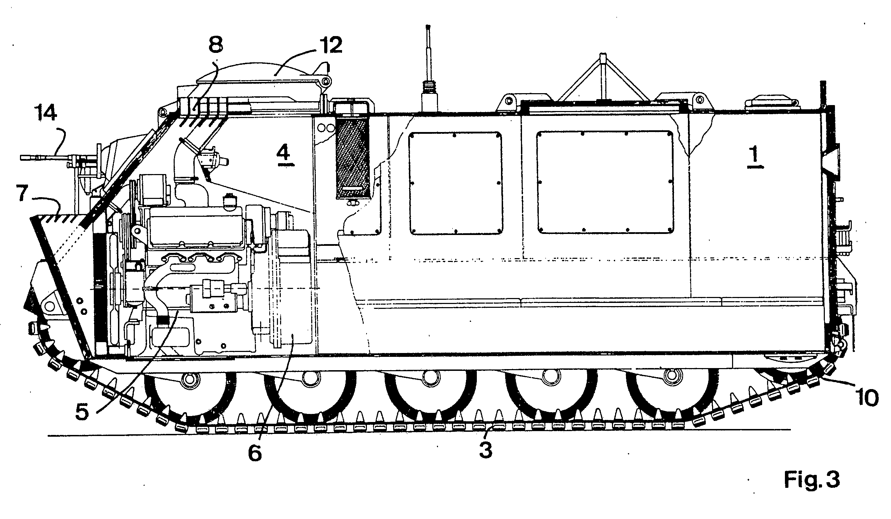

c) en figure 3, une vue en élévation et en coupe,

d'un véhicule chenillé conçu comme transporteur de troupes, selon la présente invention. La description des dessins sera toutefois limitée à celle des éléments nécessaires à la bonne compréhension de la portée de la présente invention.

En référence aux dessins annexés, 1 désigne la coque du véhicule chenillé qui est supporté et propulsé par une chenille babord 2 et une chenille tribord 3. Un compartiment 4 est prévu à l'avant de la coque 1 pour contenir le groupe électrogène et les deux postes de conduite et de tir. Le groupe électrogène comprenant un moteur thermique, en l'occurrence un moteur à combustion interne 5, et une génératrice de courant électrique en l'occurrence un alternateur 6, est disposé au centre du compartiment 4. Des ouïes d'entrée d'air 7 et de sortie d'air et de gaz d'échappement 8 sont prévues respectivement à l'avant et à la partie supérieure du compartiment 4.

La propulsion du véhicule chenillé est assurée par un barbotin moteur babord 9 et un barbotin moteur tribord 10, qui sont localisés à l'arrière de la coque 1 du véhicule et qui entraînent respectivement la chenille babord 2 et la chenille tribord 3.

De part et d'autre du groupe électrogène se trouvent des postes de conduite et de tir, auxquels on a accès par une écoutille babord 11 et par une écoutille tribord 12. Le véhicule chenillé est ainsi équipé d'une arme de tir babord 13 et d'une arme de tir tribord 14, qui peuvent être actionnées indépendamment l'une de l'autre.

L'application de la présente invention n'est pas limitée aux véhicules chenillés du type décrit ci-dessus et illustré dans les dessins annexés; elle est aussi applicable aux véhicules porteurs d'armes principales de tir comme les véhicules blindés porteurs de mitrailleuses lourdes ou de canons-mitrailleurs, voire de canons L'exemple de réalisation donné dans la description ci-dessus est donné à titre non limitatif.

## Revendication

Véhicule blindé à propulsion par chenilles au moyen de barbotins moteurs (9, 10) entraînés par un ensemble de propulsion comprenant un moteur d'entraînement (5) disposé à la partie avant (4) du véhicule et à côté de ce moteur un espace libre et un espace arrière aménagé en un compartiment arrière entre et au dessus des chenilles (2, 3), accessible au moins par une porte arrière, caractérisé en ce que:

a) l'ensemble de propulsion comprend un groupe électrogène formé du moteur d'entraînement (5) et d'une génératrice de courant électrique (6) disposé longitudinalement à la partie centrale de l'avant (4) du véhicule, directement derrière la paroi frontale blindée.

b) des postes de conduite et de tir sont disposés à l'avant du véhicule de part et d'autre de l'ensemble de propulsion,

c) les barbotins moteurs (9, 10) sont disposés à l'arrière des chenilles (2, 3) et sont équipés de moteurs électriques incorporés, laissant entr'eux l'accès libre au compartiment arrière.

## Patentanspruch

Kettengetriebenes Panzerfahrzeug, dessen Ketter mittels Kettentreibrädern (9, 10) angetrieben sind, die ihrerseits von einer Antriebsbaugruppe angetrieben werden, die einen Antriebsmotor (5) im Vorderteil (4) des Fahrzeugs und seitlich des Motors einen freien Raum aufweist, wobei zwischen und über den Ketten (2, 3) ein wenigstens durch eine Hintertür zugänglicher, ein Anteil bildender Hinterraum vorgesehen ist, dadurch gekennzeichnet,

a) dass die Antriebsbaugruppe eine vom Antriebsmotor (5) und von einem elektrischen Strom erzeugenden Generator (6) gebildete Stromerzeuger-Baugruppe enthält, die in Längsrichtung zum Mittelteil des Vorderteils (4) des Fahrzugs direkt hinter der gepanzerten Frontwand angeordnet ist,

b) dass im Vorderteil des Fahrzeugs beiderseits der Antriebsbaugruppe Lenk-und schiesseinrichtungen angebracht sind,

c) dass die Kettentreibräder (9, 10) am hinteren Teil der Ketten (2, 3) angebracht und mit eingebauten Elektromotoren ausgestattet sind, die zwischen sich den freien Zugang zu dem hinteren Abteil freilassen.

## Claim

Armoured vehicle propelled by caterpillar tracks by means of sprocket drive-wheels (9, 10) which are driven by a propulsion unit comprising a drive motor (5), located in the front part (4) of the vehicle, and, at the side of this motor, a free space and a rear space which is organised into a rear compartment between and above the caterpillar tracks (2, 3) and which is accessible at least via a rear door, characterised in that:

a) the propulsion unit comprises an electricity-generating set which consists of the drive motor (5) and of a generator of electrical current (6) arranged longitudinally in the central part of the front (4) of the vehicle, directly behind the armoured front wall.

b) driving and firing posts are located at the front end of the vehicle on either side of the propulsion unit,

c) the sprocket drive-wheels (9, 10) are located at the rear of the caterpillar tracks (2, 3) and are equipped with built-in electric motors, leaving between them free access to the rear compartment.

Fig.1

0 001 033

Fig.2

0 001 033

**Fig. 3**

0 001 033